# EUROPEAN PATENT SPECIFICATION

(11) **EP 2 811 131 B1**
(45) Date of publication and mention of the grant of the patent: **30.09.2015**
(21) Application number: 14170777.8
(22) Date of filing: 02.06.2014
(51) Int. Cl.: F01N 3/28, B32B 5/26, B32B 27/12

(54) **Holding sealing material, method for manufacturing holding sealing material, exhaust gas purifying apparatus, and method for manufacturing exhaust gas purifying apparatus**
Haltedichtungsmaterial, Verfahren zur Herstellung des Haltedichtungsmaterial, Abgasreinigungsvorrichtung und Verfahren zur Herstellung einer Abgasreinigungsvorrichtung
Matériau d'étanchéité de maintien, procédé de fabrication d'un tel matériau, appareil de purification de gaz d'échappement et procédé de fabrication dudit appareil

(30) Priority: 03.06.2013 JP 2013117145
(43) Date of publication of application: 10.12.2014
(73) Proprietor: Ibiden Co., Ltd., Ogaki-shi Gifu 503-8604 (JP)
(72) Inventor: Uchimura, Reo, Aichi, 444-1301 (JP); Ando, Hisashi, Aichi, 444-1301 (JP); Ito, Yasutaka, Aichi, 444-1301 (JP)
(74) Representative: Hoffmann Eitle

(56) References cited:
- EP-A1- 2 388 454
- EP-A1- 2 518 289
- WO-A1-2012/088003
- US-A1- 2009 022 633
- US-A1- 2009 084 268
- US-A1- 2009 114 097
- US-A1- 2009 269 255

## Description

### TECHNICAL FIELD

The present invention relates to a holding sealing material, a method for manufacturing the holding sealing material, an exhaust gas purifying apparatus, and a method for manufacturing the exhaust gas purifying apparatus.

### BACKGROUND ART

Exhaust gases discharged from internal combustion engines (e.g., diesel engines) contain particulate matter (hereinafter, referred to also as PM). In recent years, the PM has been a problem as it is harmful to the environment and the human body. Since exhaust gases also contain harmful gas components such as CO, HC and NOₓ, the influence of the harmful gas components on the environment and the human body has also been concerned.

Therefore, various exhaust gas purifying apparatuses for collecting PM in exhaust gases and purifying the harmful gas components have been developed. Such exhaust gas purifying apparatuses include those having an exhaust gas treating body formed from a porous ceramic material (e.g., silicon carbide, cordierite), a metal casing for accommodating the exhaust gas treating body, and a holding sealing material including inorganic fibers and provided between the exhaust gas treating body and the metal casing. The holding sealing material is disposed mainly to, for example, prevent the exhaust gas treating body from breaking upon contact with the metal casing surrounding the exhaust gas treating body because of vibration or shocks caused by factors such as driving of the vehicle, and prevent leakage of exhaust gases from between the exhaust gas treating body and the metal casing.

Here, the internal combustion engine, driven under the conditions close to the theoretical air fuel ratio to improve the fuel economy, is likely to produce higher-temperature, higher-pressure exhaust gases. When the holding sealing material is exposed to such exhaust gases, the inorganic fibers constituting the holding sealing material may deteriorate because of the heat. The holding sealing material is therefore required to have excellent heat resistance. Also, when high-temperature, highpressure exhaust gases reach the exhaust gas purifying apparatus, the gap between the exhaust gas treating body and the metal casing may change depending on the difference in the coefficient of thermal expansion between these components. Therefore, the holding sealing material is required to also have the holding power (expansion pressure power) with which it can sufficiently hold an exhaust gas treating body even when such a change in the gap occurs. The holding sealing material is also required to have sufficient sealability for preventing leakage of exhaust gases from between the exhaust gas treating body and the metal casing.

The inorganic fibers constituting the holding sealing material includes a large number of scratchy fine inorganic fibers (e.g. fibers having a diameter of about 3 to 8 µm). In manufacture of an exhaust gas treating body using this holding sealing material, the inorganic fibers may unfortunately be scattered from the holding sealing material when the worker deals with the holding sealing material, which may deteriorate the work environment.

Furthermore, when winding the holding sealing material around the exhaust gas treating body, the outer surface of the holding sealing material may be ripped. Fine inorganic fibers may be scattered also from such a rip.

Patent Literature 1 discloses a double-layer holding sealing material formed by a mat that is made of ceramic fibers and arranged to face the exhaust gas treating body, and a mat that is made of ceramic fibers and arranged to face the metal casing.

The holding sealing material disclosed in Patent Literature 1 has a mat having excellent heat resistance and facing the exhaust gas treating body of which the temperature becomes high, and a mat having excellent flexibility facing the metal casing. This structure prevents deformation and quality deterioration of the holding sealing material, and improves the contact of the holding sealing material with the exhaust gas treating body and the metal casing.

Also in the holding sealing material disclosed in Patent Literature 1, the mat arranged to face the exhaust gas treating body with a small radius of curvature has a shorter length in the longitudinal direction than the mat arranged to face the metal casing with a large radius of curvature. This structure eliminates the gap in the engaging portion of the holding sealing material wound around the exhaust gas treating body, improving the sealability.

Furthermore, the holding sealing material of Patent Literature 1 is sealed by an airtight sheet, so that the ceramic fibers are prevented from damage, and assembling of the holding sealing material with the metal casing is facilitated.

Patent Literature 2 discloses a holding sealing material accommodated in the space in a packaging material to reduce scattering of inorganic fibers from the holding sealing material.

Patent Literature 3 discloses a holding sealing material that has a flexible sheet or coating on the outer surface thereof to prevent rips in the outer surface thereof when the holding sealing material is assembled with the exhaust gas treating body.

### CITATION LIST

### Patent Literature

Patent Literature 1: JP 2003-129832 A
Patent Literature 2: JP 2010-101308 A
Patent Literature 3: JP 2001-521847 A

### SUMMARY OF INVENTION

### Technical Problem

When the holding sealing material having such a structure as described in Patent Literature 1 is wound around an exhaust gas treating body, the airtight sheet comes between the holding sealing material and the exhaust gas treating body, and decreases the contact between the holding sealing material and the exhaust gas treating body. That is, the holding sealing material and the exhaust gas treating body tend to be dislocated relative to each other. The exhaust gas purifying apparatus of Patent Literature 1 is manufactured by winding the holding sealing material around an exhaust gas treating body, sandwiching the exhaust gas treating body, around which the holding sealing material is wound, by separated two metal casing parts from above and below, pressurizing the sandwich from above and below, bringing the separated metal casing parts into close contact with each other, and fixing the outer periphery of the metal casing by, for example, clinching. When an exhaust gas purifying apparatus is manufactured by such a method, the contact between the holding sealing material and the exhaust gas treating body would hardly be a problem. However, when an exhaust gas treating body around which the holding sealing material having such a structure as described in Patent Literature 1 is wound is press-fitted into a metal casing, the holding sealing material unfortunately becomes dislocated relative to the exhaust gas treating body and protrudes from the end of the metal casing. That is, the holding sealing material having such a structure as described in Patent Literature 1 has a disadvantage that it is not suitable for press fitting. The holding sealing material having such a structure as described in Patent Literature 2 has the same disadvantage.

The holding sealing material having such a structure as described in Patent Literature 3 can reduce scattering of inorganic fibers from the outer surface of the holding sealing material on which a flexible sheet or coating is formed. However, the holding sealing material cannot sufficiently reduce scattering of inorganic fibers from the side surfaces of the holding sealing material.

The object of the present invention made to measure the above problems is to provide a holding sealing material which, when wound around an exhaust gas treating body, is hardly dislocated relative to the exhaust gas treating body and hardly protrudes from the end of a metal casing upon press-fitting of the exhaust gas treating body into the metal casing, and can reduce scattering of inorganic fibers; a method for manufacturing the holding sealing material; an exhaust gas purifying apparatus including the holding sealing material; and a method for manufacturing the exhaust gas purifying apparatus including the holding sealing material.

### Solution to Problem

In order to achieve the above object, the holding sealing material of the present invention includes a laminate of a plurality of mats each containing inorganic fibers and having a rectangular shape in a plan view, the mats arranged in the order of longitudinal length from the shortest to the longest; and a film adhered to a first main surface and longitudinal side surfaces of the mat with the longest longitudinal length among the mats of the laminate, the first main surface being on the side opposite to a second main surface which is in contact with the next longest mat, the film adhered to the second main surface to allow the second main surface to be partly exposed.

The holding sealing material of the present invention is typically used for an exhaust gas purifying apparatus which is configured to include an exhaust gas treating body, a metal casing accommodating the exhaust gas treating body, and a holding sealing material disposed between the exhaust gas treating body and the metal casing. The holding sealing material of the present invention is wound around the exhaust gas treating body, and the exhaust gas treating body around which the holding sealing material of the present invention is wound is accommodated into the metal casing.

The holding sealing material of the present invention includes a laminate of a plurality of mats each containing inorganic fibers and having a rectangular shape in a plan view, the mats arranged in the order of longitudinal length from the shortest to the longest.

The holding sealing material of the present invention is typically wound around the exhaust gas treating body so that the mat having the shortest length in the longitudinal direction comes into contact with the exhaust gas treating body. Hence, among the mats of the holding sealing material wound around the exhaust gas treating body, the mat in contact with the exhaust gas treating body has the shortest length, and the other mats each have a longer length than the next inner mat. Accordingly, when the holding sealing material of the present invention is wound around the exhaust gas treating body, a gap attributed to the different inner and outer peripheries is hardly generated in the portion where the ends of the holding sealing material meet. The exhaust gas purifying apparatus including the holding sealing material of the present invention therefore has sufficient sealability for preventing exhaust gas leakage.

The holding sealing material of the present invention includes a film adhered to a first main surface and longitudinal side surfaces of the mat with the longest longitudinal length among the mats of the laminate, the first main surface being on the side opposite to a second main surface which is in contact with the next longest mat.

The surface of the mat is the part from which inorganic fibers are scattered. In particular, the mat constituting the outermost layer of the laminate is placed in the position of the largest radius of curvature, and thus receives the largest tensile stress when the holding sealing material is wound around the exhaust gas treating body. The tensile stress causes the inorganic fibers to be easily torn. As a result, a defect such as a rip is generated in the surface of the mat, and thus the inorganic fibers are likely to be scattered.

However, if a film is adhered to the mat as in the case of the holding sealing material of the present invention, such scattering of inorganic fibers can be reduced.

Scattering of inorganic fibers occurs not only from the main surfaces of the holding sealing material but also from the longitudinal side surfaces of the holding sealing material. The longitudinal side surfaces are surfaces located at parts constituting the long sides of the rectangle in a plan view of the mat. In particular, when the exhaust gas treating body around which the holding sealing material is wound is press-fitted into the metal casing, the holding sealing material is compressed in the thickness direction. The holding sealing material is therefore likely to discharge air from the longitudinal side surfaces. The discharging air leads to scattering of inorganic fibers. Such scattering of inorganic fibers from the longitudinal side surfaces of the holding sealing material is not negligible from the viewpoint of improvement in the work environment.

The holding sealing material of the present invention includes a film adhered to the longitudinal side surfaces of the mat having the longest longitudinal length. This structure reduces scattering of inorganic fibers from the parts to which a film is adhered. Accordingly, scattering of inorganic fibers can be reduced in dealing with the holding sealing material of the present invention.

If the main surface of the mat having the longest longitudinal length in contact with the mat of the lower layer (hereinafter, also referred to as the second main surface) is completely covered with a film, the contact between the mat with the longest longitudinal length and the next longest mat in contact with the longest mat decreases. Hence, when the exhaust gas treating body around which the holding sealing material having the above structure is wound is press-fitted into the metal casing, the mat with the longest longitudinal length and the next longest mat in contact with the longest mat are likely to be dislocated relative to each other. As a result, the dislocated mat is likely to protrude from the end of the metal casing. In the holding sealing material of the present invention, however, the film is adhered to the second main surface of the mat with the longest longitudinal length, so that the second main surface is partly exposed. The exposed part allows the mat with the longest longitudinal length to come into direct contact with the next longest mat. That is, at this part, the inorganic fibers contained in the mats are in direct contact and are thus entangled, whereby the contact between the mats increases. Furthermore, since the inorganic fibers are rubbed against each other, the mat with the longest longitudinal length and the next longest mat in contact with the longest mat are not likely to be dislocated relative to each other when the exhaust gas treating body around which the holding sealing material of the present invention is wound is press-fitted into the metal casing. Therefore, protrusion of the mat from the end of the metal casing can be prevented.

In the holding sealing material of the present invention, preferably, the film adhered to the surfaces of the mat with the longest longitudinal length is continuously wound once around the mat in the direction perpendicular to the longitudinal direction of the mat, the mat with the longest longitudinal length has a winding start position and a winding end position on the second main surface, and the winding start position and the winding end position are spaced apart from each other.

Here, winding once means that, in the state where the winding start position and the winding end position exist on the same main surface, winding starts from the winding start position, passes through the side surface closer to the winding start position, the main surface opposite to the main surface where the winding start position and the winding end position exist, and the side surface closer to the winding end position, and then ends at the winding end position when the winding comes to the winding end position for the first time.

The expression of being "spaced apart" means that the winding start position and the winding end position are apart from each other, so that the film does not exist between these positions.

The film adhered to the holding sealing material having the above structure is seamless. Accordingly, scattering of inorganic fibers from seams of the film does not occur. Scattering of inorganic fibers from the holding sealing material can therefore be reduced.

The parts of the film adhered to the second main surface of the mat with the longest longitudinal length are sandwiched between the mat with the longest longitudinal length and the next longest mat in contact with the longest mat. This structure prevents peeling of the film.

In the holding sealing material of the present invention, the laminate of the plurality of mats preferably consists of two mats.

If the laminate includes three or more mats, the laminate has a bulky size which increases the working step and thus makes it difficult to handle the holding sealing material efficiently in production of the holding sealing material or winding of the holding sealing material around the exhaust gas treating body. If, however, the laminate as the holding sealing material includes two mats, manufacture of the holding sealing material is easy. The structure also facilitates handling of the holding sealing material when the holding sealing material is transferred or when the holding sealing material is wound around the exhaust gas treating body.

In the holding sealing material of the present invention, the film preferably includes at least one material selected from the group consisting of polyester, high-density polyethylene, and polypropylene.

As described above, the holding sealing material of the present invention is usually wound around the exhaust gas treating body, and then press-fitted into the metal casing. At this time, the mat constituting the outermost layer of the laminate and with the longest longitudinal length comes into contact with the metal casing via the film.

If the film includes at least one material selected from the group consisting of polyester, high-density polyethylene, and polypropylene, the coefficient of friction between the mat and metal casing is small. Therefore, the exhaust gas treating body around which the holding sealing material of the present invention is wound can be press-fitted smoothly into the metal casing.

In the holding sealing material of the present invention, the film is preferably fixed on the laminate of the plurality of mats with an adhesive or by thermocompression bonding.

Using an adhesive or thermocompression bonding, the film can be firmly fixed to the holding sealing material.

In the holding sealing material of the present invention, the plurality of mats of the laminate are preferably bound by at least one band having no fixing strength.

In the holding sealing material having the above structure, the mats are not fixed to each other, and thus the mats can be moved in the longitudinal direction when the holding sealing material is wound around the exhaust gas treating body.

Accordingly, even when the mats are dislocated relative to each other, the relative positions of the mats can be finely adjusted when the holding sealing material is wound around the exhaust gas treating body. As a result, a gap is less likely to be formed at a part where the ends of the holding sealing material meet.

In the holding sealing material of the present invention, the band is preferably made of paper or resin.

Paper or resin can be suitably used as a band having no fixing strength to the surface of the mat.

In the holding sealing material of the present invention, the plurality of mats of the laminate are preferably fixed to each other at at least one fixed part.

When the mats are fixed to each other at at least one fixed part, the mats are not separated from each other, and thereby it is easier to handle the holding sealing material. Also, the holding sealing material can be easily wound around the exhaust gas treating body without separately positioning the mats.

In the holding sealing material of the present invention, the fixed part preferably exists along the direction perpendicular to the longitudinal direction of the laminate of the plurality of mats.

If the fixed part extends in the direction perpendicular to the longitudinal direction of the holding sealing material, the mats can be prevented from moving in the direction perpendicular to the longitudinal direction of the holding sealing material when the holding sealing material is wound around the exhaust gas treating body.

Also, if the fixed part exists along the direction parallel to the longitudinal direction of the holding sealing material, tensile stress tends to be generated in the outer peripheral portion of the holding sealing material, and wrinkles tend to be generated in the inner peripheral portion of the holding sealing material. This structure causes to generate a gap between the holding sealing material and the exhaust gas treating body. However, if the fixed part extends in the direction perpendicular to the longitudinal direction of the holding sealing material, generation of such tensile stress or wrinkles can be prevented, so that a gap does not easily form between the holding sealing material and the exhaust gas treating body.

In the holding sealing material of the present invention, the fixed part is preferably made of thread, pressure-sensitive adhesive tape, or an adhesive.

Thread, pressure-sensitive adhesive tape, or an adhesive can be suitably used as the fixed part for fixing the mats.

The exhaust gas purifying apparatus of the present invention includes: an exhaust gas treating body, a metal casing accommodating the exhaust gas treating body, and a holding sealing material placed between the exhaust gas treating body and the metal casing, the holding sealing material containing a laminate of a plurality of mats each containing inorganic fibers and having a rectangular shape in a plan view, the mats arranged in the order of longitudinal length from the shortest to the longest, the mat with the longest longitudinal length among the mats of the laminate facing the metal casing, the mat with the shortest longitudinal length among the mats of the laminate facing the exhaust gas treating body, the holding sealing material including a film adhered to a first main surface and longitudinal side surfaces of the mat with the longest longitudinal length among the mats of the laminate, the first main surface being on the side opposite to a second surface which is in contact with the next longest mat, the film adhered to the second main surface to allow the second main surface to be partly exposed.

The exhaust gas purifying apparatus of the present invention including the holding sealing material of the present invention can achieve the above effects.

In the exhaust gas purifying apparatus of the present invention, preferably, the film adhered to the surfaces of the mat with the longest longitudinal length is continuously wound once around the mat in the direction perpendicular to the longitudinal direction of the mat, the mat with the shortest longitudinal length has a winding start position and a winding end position on the second main surface, and the winding start position and the winding end position are spaced apart from each other.

In the exhaust gas purifying apparatus having the above structure, the film adhered to the holding sealing material is seamless. Accordingly, scattering of inorganic fibers from seams of the film does not occur. Scattering of inorganic fibers from the holding sealing material can therefore be reduced when the exhaust gas purifying apparatus is manufactured, for example.

The method for manufacturing an exhaust gas purifying apparatus according to the present invention is a method for manufacturing the exhaust gas purifying apparatus including an exhaust gas treating body, a metal casing accommodating the exhaust gas treating body, and a holding sealing material placed between the exhaust gas treating body and the metal casing, the holding sealing material containing a laminate of a plurality of mats each containing inorganic fibers and having a rectangular shape in a plan view, the mats arranged in the order of longitudinal length from the shortest to the longest, the mat with the longest longitudinal length among the mats of the laminate facing the metal casing, the mat with the shortest longitudinal length among the mats of the laminate the exhaust gas treating body. The method includes: adhering a film to both main surfaces and longitudinal side surfaces of the mat with the longest longitudinal length to allow part of one of the main surfaces to be exposed; forming the laminate of the plurality of mats by arranging the mats in the order of longitudinal length from the shortest to the longest by bringing the exposed main surface of the longest mat as a top layer in contact with the next longest mat; winding the laminate of the plurality of mats around the exhaust gas treating body by allowing the mat with the longest longitudinal length to face the metal casing and allowing the mat with the shortest longitudinal length to face the exhaust gas treating body; and press-fitting the exhaust gas treating body with the laminate of the plurality of mats wound therearound into the metal casing.

The method for manufacturing the exhaust gas purifying apparatus of the present invention using the above holding sealing material of the present invention can achieve the above effects.

In the method for manufacturing an exhaust gas purifying apparatus according to the present invention, preferably, the film is adhered to the surfaces of the mat with the longest longitudinal length by continuously winding the film once around the mat in the direction perpendicular to the longitudinal direction of the mat, the mat with the longest longitudinal length is made to have a winding start position and a winding end position on the partly exposed main surface, and the winding start position and the winding end position are spaced apart from each other.

Adhesion of a film in this manner enables adhesion of the film to the main surfaces and longitudinal side surfaces of the mat such that part of one of the main surfaces of the mat with the longest longitudinal length is exposed in one step. Accordingly, the film can be adhered efficiently.

Also, adhesion of a film in this manner enables adhesion of the film without seams. With such a seamless film, scattering of inorganic fibers from seams of the film does not occur. Scattering of inorganic fibers can be reduced in the winding of the laminate of the mats around the exhaust gas treating body and in the press-fitting of the exhaust gas treating body with the laminate of the mats wound therearound into the metal casing.

### BRIEF DESCRIPTION OF DRAWINGS

Fig. 1 is a cross-sectional view schematically illustrating one example of the exhaust gas purifying apparatus of the present invention.
Fig. 2(a) is a perspective view schematically illustrating one example of the holding sealing material of the present invention. Fig. 2(b) is a perspective view schematically illustrating one example of an upper layer mat constituting the holding sealing material of the present invention. Fig. 2(c) is a perspective view schematically illustrating one example of a lower layer mat constituting the holding sealing material of the present invention.

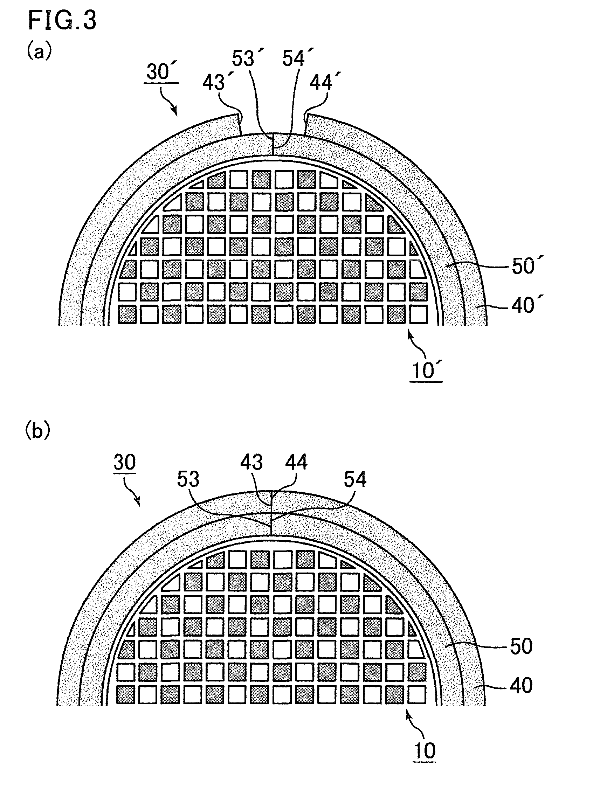

Fig. 3(a) is an enlarged schematic cross-sectional view taken in the direction perpendicular to the longitudinal length of an exhaust gas treating body having a holding sealing material wound therearound, which illustrates the portion where the ends of the holding sealing material including an upper layer mat and a lower layer mat having substantially the same full length meet. Fig. 3(b) is an enlarged schematic cross-sectional view taken in the direction perpendicular to the longitudinal direction of an exhaust gas treating body having the holding sealing material of the present invention wound therearound, which illustrates the portion where the ends of the holding sealing material of the present invention meet.
Fig. 4 is a cross-sectional view taken along the A-A line in Fig. 2(a).
Figs. 5(a) to 5(c) each schematically illustrate one example of the shape of a film to be adhered to the holding sealing material of the present invention.
Fig. 6 is a perspective view schematically illustrating one example of an exhaust gas treating body constituting the exhaust gas purifying apparatus of the present invention.
Fig. 7 is a perspective view schematically illustrating one example of the process of accommodating the exhaust gas treating body having the holding sealing material of the present invention wound therearound into a metal casing.
Figs. 8(a) to 8(c) are each a schematic cross-sectional view taken in the direction perpendicular to the longitudinal direction of the holding sealing material of a comparative example of the present invention.
Fig. 9(a) is a photograph showing the state where the exhaust gas treating body around which the holding sealing material of the present invention is wound has been normally press-fitted into the metal casing. Fig. 9(b) is a photograph showing the state where when the exhaust gas treating body around which the holding sealing material formed by a laminate of mats is wound is press-fitted, the mats constituting the holding sealing material are dislocated relative to each other, and the dislocated mats are protruding from the end of the metal casing.

### DESCRIPTION OF EMBODIMENTS

Hereafter, the present invention is described in detail. The present invention, however, is not limited by the following description, and appropriate changes may be made without departing from the scope of the present invention. The present invention also encompasses combinations of preferred structures of the present invention described below.

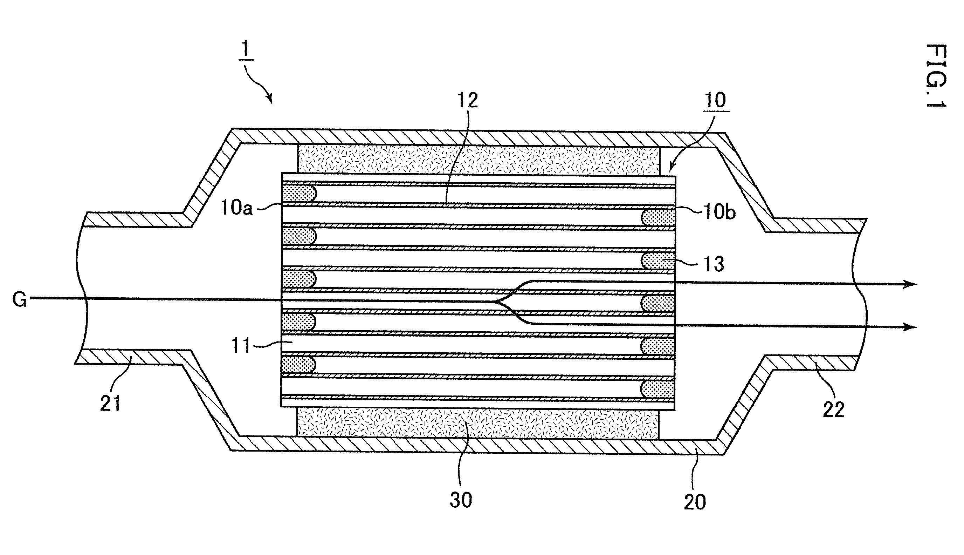

Fig. 1 is a cross-sectional view schematically illustrating one example of the exhaust gas purifying apparatus of the present invention.

As illustrated in Fig. 1, an exhaust gas purifying apparatus 1, which is one example of the exhaust gas purifying apparatus of the present invention, includes an exhaust gas treating body 10, a metal casing 20 covering the outer side of the exhaust gas treating body 10, and a holding sealing material 30 placed between the exhaust gas treating body 10 and the metal casing 20. To the end of the metal casing 20 from which exhaust gases are introduced, an inlet pipe 21 connected to an internal combustion engine (e.g., gasoline engine) is coupled. To the other end of the metal casing 20, an outlet pipe 22 connected to the outside is coupled.

In the exhaust gas purifying apparatus 1 illustrated in Fig. 1, the exhaust gas treating body 10 is an exhaust gas filter (honeycomb filter) in which either one end of each cell is sealed by a plug 13.

Passage of exhaust gases through the exhaust gas purifying apparatus 1 having the above structure is described below with reference to Fig. 1.

As illustrated in Fig. 1, exhaust gases discharged from the internal combustion engine and flown into the exhaust gas purifying apparatus 1 (in Fig. 1, exhaust gases are indicated by G, and the flow of the exhaust gases is indicated by the arrows) are flown into cells 11 which are open at an exhaust gas inlet-side end 10a of the exhaust gas treating body 10. Exhaust gases flown into one of the cells 11 pass through cell walls 21 separating the cells 11. At this time, PM in the exhaust gasses is captured by the cell walls 12, so that the exhaust gases are purified. The purified exhaust gases flow out from the other cells 11, which are open at the exhaust gas outlet-side end 10b, so as to be discharged to the outside.

Next, the holding sealing material 30 of the present invention is described.

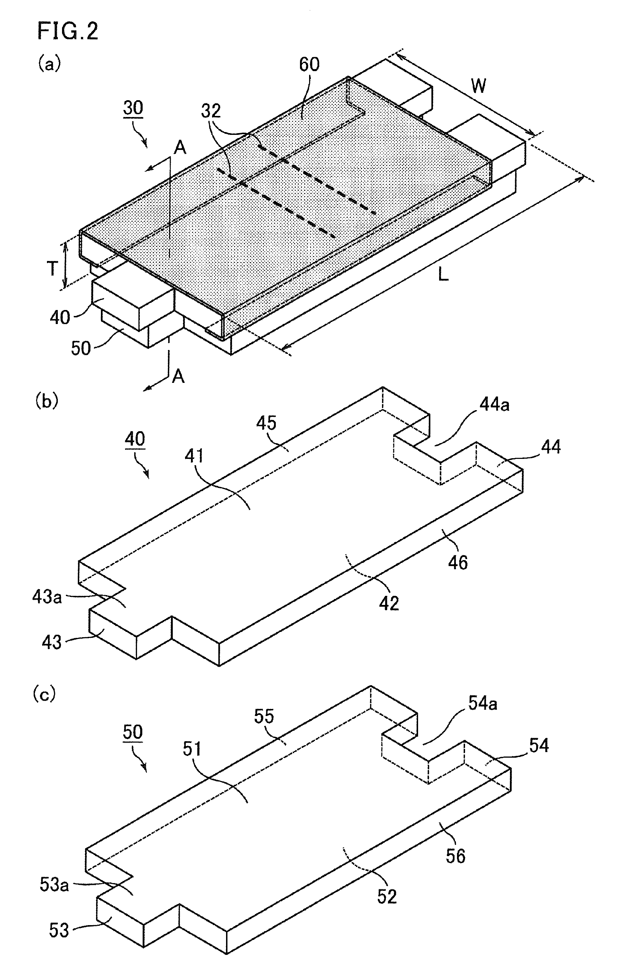

Fig. 2(a) is a perspective view schematically illustrating one example of the holding sealing material of the present invention. Fig. 2(b) is a perspective view schematically illustrating one example of an upper layer mat constituting the holding sealing material of the present invention. Fig. 2(c) is a perspective view schematically illustrating one example of a lower layer mat constituting the holding sealing material of the present invention.

The holding sealing material 30 of the present invention illustrated in Fig. 2(a) is a laminate of two mats, namely an upper layer mat 40 and a lower layer mat 50, each including inorganic fibers and having a substantially rectangular shape in a plan view with a predetermined longitudinal length (also referred to simply as a full length; indicated by the arrow L in Fig. 2(a)), a predetermined width (indicated by the arrow W in Fig. 2(a)), and a predetermined thickness (indicated by the arrow T in Fig. 2(a)).

The upper layer mat 40 has a first main surface 41 not in contact with the lower layer mat 50, and a second main surface 42 which is on the side opposite to the first main surface 41 and is in contact with the lower layer mat 50. The upper layer mat 40 includes an end 43 at which a projected portion 43a is formed, an end 44 at which a recessed portion 44a is formed, a first side surface 45 that is a longitudinal side surface, and a second side surface 46 that is on the side opposite to the first side surface 45. The longitudinal side surface is a surface located at a part constituting a long side of the rectangle in a plan view of the upper layer mat 40. The projected portion 43a and the recessed portion 44a have shapes that allow the projected portion 43a and the recessed portion 44a to fit each other when the holding sealing material 30 is wound around the exhaust gas treating body 10 for assembly of the exhaust gas purifying apparatus 1.

The lower layer mat 50 has a first main surface 51 in contact with the upper layer mat 40, and a second main surface 52 which is on the side opposite to the first main surface 51 and is not in contact with the upper layer mat 40. The lower layer mat 50 includes an end 53 at which a projected portion 53a is formed, an end 54 at which a recessed portion 54a is formed, a first side surface 55 that is a longitudinal side surface, and a second side surface 56 that is on the side opposite to the first side surface 55. The longitudinal side surface is a surface located at a part constituting a long side of the rectangle in a plan view of the lower layer mat 50. The projected portion 53a and the recessed portion 54a have shapes that allow the projected portion 53a and the recessed portion 54a to fit each other when the holding sealing material 30 is wound around the exhaust gas treating body 10 for assembly of the exhaust gas purifying apparatus 1.

In the exhaust gas purifying apparatus 1 of the present invention, the upper layer mat 40 is placed to face the metal casing 20, and the lower layer mat 50 is placed to face the exhaust gas treating body 10.

In the holding sealing material 30 of the present invention, the full length of the upper layer mat 40 is made longer than the full length of the lower layer mat 50 such that a gap is not formed between the ends of the holding sealing material 30 when the holding sealing material 30 is wound around the exhaust gas treating body 10. This structure is described based on Figs. 3(a) and 3(b).

Fig. 3(a) is an enlarged schematic cross-sectional view taken in the direction perpendicular to the longitudinal length of an exhaust gas treating body having a holding sealing material wound therearound, which illustrates the portion where the ends of the holding sealing material including an upper layer mat and a lower layer mat having substantially the same full length meet. Fig. 3(b) is an enlarged schematic cross-sectional view taken in the direction perpendicular to the longitudinal direction of an exhaust gas treating body having the holding sealing material of the present invention wound therearound, which illustrates the portion where the ends of the holding sealing material of the present invention meet.

As illustrated in Fig. 3(a), when an upper layer mat 40' and a lower layer mat 50' constituting a holding sealing material 30' have substantially the same full length, a gap is formed because of the different inner and outer peripheries when the holding sealing material 30' is wound around the exhaust gas treating body 10'. That is, an end 53' and an end 54' of the lower layer mat 50' fit each other substantially without a gap, but a gap is formed between an end 43' and an end 44' of the upper layer mat 40' because of the different inner and outer peripheries.

In contrast, as illustrated in Fig. 3(b), the full length of the upper layer mat 40 constituting the holding sealing material 30 of the present invention is longer than the full length of the lower layer mat 50 so that the above gap because of the different inner and outer peripheries is filled. This structure allows the end 43 and the end 44 of the upper layer mat 40 to fit each other substantially without a gap when the holding sealing material 30 is wound around the exhaust gas treating body 10.

The exhaust gas purifying apparatus 1 including the holding sealing material 30 of the present invention therefore has sufficient sealability for preventing leakage of exhaust gases. The full length of the upper layer mat 40 is preferably 1.05 to 1.10 times the full length of the lower layer mat 50.

The upper layer mat 40 and the lower layer mat 50 are each obtained by needle-punching a base mat made of inorganic fibers. Here, the needle punching refers to inserting and drawing a fiber-interlacing tool such as needles into and from the base mat. In each of the upper layer mat 40 and the lower layer mat 50, inorganic fibers having a relatively long average fiber length are three-dimensionally interlaced by needle punching. These mats are each needle-punched in the width direction which is perpendicular to the longitudinal direction.

The inorganic fibers may be any inorganic fibers having a certain average fiber length, for example an average fiber length of about 50 µm to 100 mm, for forming an interlaced structure.

The inorganic fibers constituting each of the upper layer mat 40 and the lower layer mat 50 preferably have an average fiber diameter of 1 to 20 µm, more preferably 3 to 10 µm. An average fiber diameter of the inorganic fibers of 1 to 20 µm may sufficiently increase the strength and flexibility of the inorganic fibers. Therefore, the shear strength of the upper layer mat 40 and the lower layer mat 50 increases.

An average fiber diameter of the inorganic fibers of smaller than 1 µm may make the inorganic fibers thin and easily breakable to give insufficient tensile strength to the inorganic fibers. An average fiber diameter of the inorganic fibers of greater than 20 µm may not allow the inorganic fibers to easily bend, giving insufficient flexibility to the fibers.

The basis weight (weight per unit area) of each of the upper layer mat 40 and the lower layer mat 50 is not particularly limited, but is preferably 200 to 4000 g/m², and more preferably 1000 to 3000 g/m². A basis weight of less than 200 g/m² may not provide sufficient holding strength to each of the upper layer mat 40 and the lower layer mat 50. Therefore, when the exhaust gas purifying apparatus 1 is manufactured using these upper layer mat 40 and the lower layer mat 50, the exhaust gas treating body 10 tends to come off. A basis weight of more than 4000 g/m² makes it difficult to reduce the bulky size of the upper layer mat 40 and the lower layer mat 50.

The bulk density of each of the upper layer mat 40 and the lower layer mat 50 (bulk density of each mat of the holding sealing material before winding) is not particularly limited either, but is preferably 0.10 to 0.30 g/cm³. A bulk density of each of the upper layer mat 40 and the lower layer mat 50 of less than 0.10 g/cm³ may have the inorganic fibers interlaced insufficiently to let the inorganic fibers be separated, thereby making it difficult to maintain the predetermined shapes of the upper layer mat 40 and the lower layer mat 50.

A bulk density of each of the upper layer mat 40 and the lower layer mat 50 of more than 0.30 g/cm³ may make the upper layer mat 40 and the lower layer mat 50 stiff to decrease the winding property for the exhaust gas treating body 10, causing breakage of each mat easily.

For reduction of the bulky size or improvement of the workability before assembly of the exhaust gas purifying apparatus 1, each of the upper layer mat 40 and the lower layer mat 50 may further contain a binder such as an organic binder.

The thickness of each of the upper layer mat 40 and the lower layer mat 50 is preferably 1.5 to 15 mm.

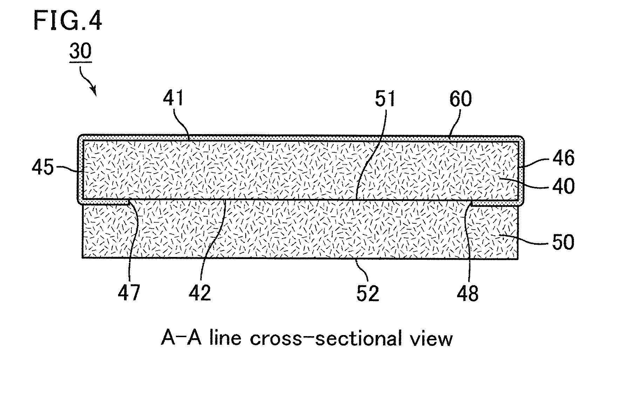

Fig. 4 is a cross-sectional view taken along the A-A line in Fig. 2(a).

As illustrated in Fig. 4, a film 60 is adhered to the holding sealing material 30. The film 60 adhered is one sheet, and is continuously wound once around the upper layer mat 40 in the direction perpendicular to the longitudinal direction of the upper layer mat 40 from a winding start position 47 to a winding end position 48 which are on the second main surface 42. That is, the film 60 is continuously wound around the upper layer mat 40 from the winding start position 47 as a start position of winding to the winding end position 48 which are on the second main surface 42, along the second main surface 42, the first side surface 45, the first main surface 41, the second side surface 46, and the second main surface 42. The winding start position 47 and the winding end position 48 are apart from each other such that part of the second main surface 42 of the upper layer mat 40 is exposed.

In the holding sealing material 30 of the present invention, the film 60 is adhered to the second main surface 42 of the upper layer mat 40, so that the second main surface 42 is partly exposed. The exposed part allows the second main surface 42 of the upper layer mat 40 to come into direct contact with the first main surface 51 of the lower layer mat 50. That is, at this part, the inorganic fibers contained in the mats are in direct contact and are thus entangled, whereby the contact between the upper layer mat 40 and the lower layer mat 50 increases. Furthermore, since the inorganic fibers contained in the mats are rubbed against each other, the mats are not likely to be dislocated relative to each other when the exhaust gas treating body 10 around which the holding sealing material 30 of the present invention is wound is press-fitted into the metal casing 20. Therefore, protrusion of the upper layer mat 40 from the end of the metal casing 20 can be prevented.

The area where the first main surface 51 of the lower layer mat 50 is in direct contact with the second main surface 42 of the upper layer mat 40 is preferably 40 to 90%, more preferably 80 to 90%, of the entire area of the first main surface 51 of the lower layer mat 50. The area in the above range enables sufficient prevention of dislocation of the mats relative to each other.

The mat 60 is adhered to the first main surface 41 of the upper layer mat 40.

When the holding sealing material 30 is wound around the exhaust gas treating body 10, the upper layer mat 40 comes to an outer position than the lower layer mat 50. As a result, the upper layer mat 40 has a larger radius of curvature than the lower layer mat 50, and thus receives larger tensile stress.

The tensile stress causes the inorganic fibers to be easily torn. As a result, a defect such as a rip is generated in the first main surface 41 of the upper layer mat 40, and thus the inorganic fibers are likely to be scattered.

However, the film 60 is adhered to the mat of the holding sealing material 30 of the present invention. Accordingly, scattering of inorganic fibers from the first main surface 41 can be reduced.

The film 60 is adhered to the first side surface 45 and the second side surface 46 of the upper layer mat 40 in the holding sealing material 30 of the present invention.

Scattering of inorganic fibers of the holding sealing material 30 occurs not only from the first main surface 41 of the upper layer mat 40 but also from the first and second side surfaces 45 and 46 of the upper layer mat 40.

In particular, when the exhaust gas treating body 10 around which the holding sealing material 30 is wound is press-fitted into the metal casing 20, the holding sealing material 30 is compressed in the thickness direction. The holding sealing material 30 is therefore likely to discharge air from the first and second side surfaces 45 and 46 of the upper layer mat 40. The discharging air leads to scattering of inorganic fibers.

The holding sealing material 30 of the present invention includes the film 60 adhered to the first and second side surfaces 45 and 46 of the upper layer mat 40 as described above. This structure reduces scattering of inorganic fibers from the parts to which the film 60 is adhered. Accordingly, scattering of inorganic fibers can be reduced in dealing with the holding sealing material 30 of the present invention.

As described above, the film 60 is one sheet, and is continuously wound once around the upper layer mat 40 from the winding start position 47 to the winding end position 48 which are on the second main surface 42 of the upper layer mat 40, in the direction perpendicular to the longitudinal direction of the upper layer mat 40. The film 60 adhered is thus seamless. Accordingly, scattering of inorganic fibers from seams of the film does not occur. Scattering of inorganic fibers from the holding sealing material 30 can therefore be reduced.

The parts of the film 60 adhered to the second main surface 42 of the upper layer mat 40 are sandwiched between the upper layer mat 40 and the lower layer mat 50. This structure prevents peeling of the film 60.

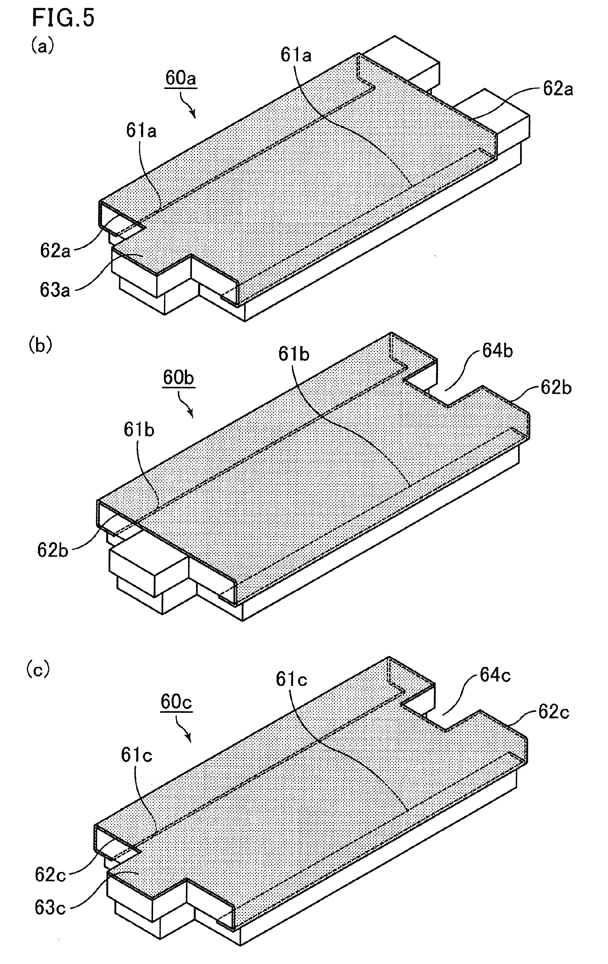

Figs. 5(a) to 5(c) each schematically illustrate one example of the shape of a film to be adhered to the holding sealing material of the present invention. Figs. 5(a) to 5(c) are each a perspective view illustrating the state where each film is adhered to the holding sealing material.

The shape of the film 60 may be any shape such as those illustrated in Figs. 5(a) to 5(c).

The film 60a illustrated in Fig. 5(a) has a substantially rectangular shape with long sides 61a and short sides 62a.

At one short side 62a of the film 60a, a projected portion 63a is formed.

When the film 60a is adhered to the upper layer mat 40, the film 60a is adhered to the upper layer mat 40 so that the projected portion 63a of the film 60a covers the projected portion 43a of the upper layer mat 40.

The film 60b illustrated in Fig. 5(b) has a substantially rectangular shape with long sides 61b and short sides 62b.

At one short side 62b of the film 60b, a recessed portion 64b is formed.

When the film 60b is adhered to the upper layer mat 40, the film 60b is adhered to the upper layer mat 40 so that the recessed portion 64b of the film 60b covers the recessed portion 44a of the upper layer mat 40.

The film 60c illustrated in Fig. 5(c) has a substantially rectangular shape with long sides 61c and short sides 62c.

At one short side 62c of the film 60c, a projected portion 63c is formed. At the other short side 62c, a recessed portion 64c is formed.

When the film 60c is adhered to the upper layer mat 40, the film 60c is adhered to the upper layer mat 40 so that the projected portion 63c of the film 60c covers the projected portion 43a of the upper layer mat 40, and the recessed portion 64c of the film 60c covers the recessed portion 44a of the upper layer mat 40.

In this way, reducing the area not covered by the film 60 on the upper layer mat 40 enables further reduction of scattering of inorganic fibers from the upper layer mat 40. Therefore, the shape of the film 60c is most preferred among these shapes.

In the holding sealing material 30 of the present invention, the film 60 is not present on the second main surface 52 of the lower layer mat 50.

This structure allows the inorganic fibers contained in the lower layer mat 50 to come into direct contact with the exhaust gas treating body 10, and to be entangled with the surface of the exhaust gas treating body 10. Thereby, the contact between the lower layer mat 50 and the exhaust gas treating body 10 increases. As a result, since the inorganic fibers are rubbed against the exhaust gas treating body 10, the lower layer mat 50 is not likely to be dislocated relative to the exhaust gas treating body 10 when the exhaust gas treating body 10 with the holding sealing material 30 wound therearound is press-fitted into the metal casing 20. Therefore, protrusion of the lower layer mat 50 from the end of the metal casing 20 can be prevented.

In the holding sealing material 30 of the present invention, the film 60 preferably includes at least one material selected from the group consisting of polyester, high-density polyethylene, and polypropylene.

As described above, the holding sealing material 30 of the present invention is wound around the exhaust gas treating body 10, and then the exhaust gas treating body 10 is press-fitted into the metal casing 20. At this time, the upper layer mat 40 comes into contact with the metal casing 20 via the film 60.

When the film 60 includes at least one selected from the group consisting of polyester, high-density polyethylene, and polypropylene, the coefficient of friction between the upper layer mat 40 and the metal casing 20 is small. Hence, the exhaust gas treating body 10 around which the holding sealing material 30 is wound can be smoothly press-fitted into the metal casing 20.

The film 60 for the holding sealing material 30 of the present invention preferably has a thickness of 30 to 60 µm.

A thickness of the film 60 of smaller than 30 µm may be excessively thin to cause breakage of the film 60.

A thickness of the film 60 of greater than 60 µm may be excessively thick to cause a very large amount of the film 60 to be adhered per unit weight of the inorganic fibers. This may result in a very large amount of gases such as hydrocarbon gas generated upon decomposition, though the holding sealing material can be press-fitted into the casing without problems.

The film 60 for the holding sealing material 30 of the present invention is preferably fixed to the holding sealing material 30 with an adhesive or by thermocompression bonding.

Using an adhesive or thermocompression bonding, the film 60 can be firmly fixed to the holding sealing material 30.

In the holding sealing material 30 of the present invention, the upper layer mat 40 and the lower layer mat 50 are fixed to each other at two fixed parts 32. The two fixed parts 32 exist along the direction perpendicular to the longitudinal direction of the holding sealing material 30.

When the upper layer mat 40 and the lower layer mat 50 are fixed to each other at the two fixed parts 32, the mats are not separated from each other, and thereby the mats are prevented from being dislocated relative to each other. It is therefore easier to handle the holding sealing material 30. Also, the holding sealing material 30 can be easily wound around the exhaust gas treating body 10 without separately positioning the mats.

If the two fixed parts 32 exist along the direction perpendicular to the longitudinal direction of the holding sealing material 30, the mats can be prevented from moving in the direction perpendicular to the longitudinal direction of the holding sealing material 30 when the holding sealing material 30 is wound around the exhaust gas treating body 10. Also, if the fixed part exists along the direction parallel to the longitudinal direction of the holding sealing material, tensile stress tends to be generated in the outer peripheral portion of the holding sealing material, and wrinkles tend to be generated in the inner peripheral portion of the holding sealing material. However, if the fixed part exists along the direction perpendicular to the longitudinal direction of the holding sealing material 30, generation of such tensile stress or wrinkles can be prevented, so that a gap does not easily form between the holding sealing material 30 and the exhaust gas treating body 10.

In the holding sealing material 30 of the present invention, the distance between the two fixed parts 32 is preferably 1/20 to 3/4 of the full length of the mat with the shortest full length, i.e., the lower layer mat 50.

If the distance between the two fixed parts 32 is shorter than 1/20 of the full length of the lower layer mat 50, the positions of the two fixed parts relative to the entire mat are concentrated to one small area, which may make it difficult to prevent dislocation of the mats in the width direction.

If the distance between the two fixed parts 32 is longer than 3/4 of the full length of the lower layer mat 50, the area between the two fixed parts 32 may be too wide. The ends of this area are fixed by the two fixed parts 32, and thus distortion because of different inner and outer peripheries tends to be generated when the holding sealing material 30 is wound around the exhaust gas treating body 10. As a result, tensile strength tends to occur on the upper layer mat 40 side, and wrinkles tend to be generated on the lower layer mat 50 side.

The fixed parts 32 for the holding sealing material 30 of the present invention are each preferably made of thread, pressure-sensitive adhesive tape, or an adhesive.

Thread, pressure-sensitive adhesive tape, or an adhesive can be suitably used as the fixed parts 32 for fixing the mats.

Next, the exhaust gas treating body 10 constituting the exhaust gas purifying apparatus 1 of the present invention is described.

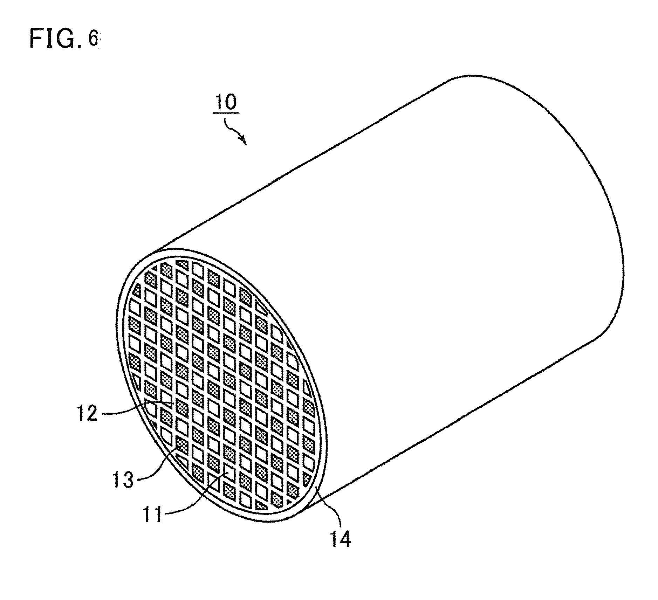

Fig. 6 is a perspective view schematically illustrating one example of an exhaust gas treating body constituting the exhaust gas purifying apparatus of the present invention.

As illustrated in Fig. 6, the exhaust gas treating body 10 is made mainly of a porous ceramic material and has a substantially cylindrical shape. Also, the exhaust gas treating body 10 is peripherally provided with a peripheral coat layer 14 so that the peripheral portion of the exhaust gas treating body 10 is reinforced, the shape of the peripheral portion is arranged, and the heat insulation of the exhaust gas treating body 10 is increased.

The internal structure of the exhaust gas treating body 10 is the same as that described above in description of the exhaust gas purifying apparatus 1 of the present invention (c.f. Fig. 1).

The exhaust gas treating body 10 may be made of non-oxidized porous ceramics such as silicon carbide and silicon nitride, or may be made of oxidized porous ceramics such as sialon, alumina, cordierite, and mullite. Preferred among these is silicon carbide.

If the exhaust gas treating body 10 is a silicon carbide based porous body, the porosity of the exhaust gas treating body is not particularly limited, but is preferably 35 to 60%.

A porosity of lower than 35% may easily cause clogging in the exhaust gas treating body, while a porosity of higher than 60% may decrease the strength of the exhaust gas treating body to make it easily broken.

The average pore diameter of the exhaust gas treating body is preferably 5 to 30 µm.

An average pore diameter of smaller than 5 µm may easily cause clogging with PM. An average pore diameter of larger than 30 µm may allow PM to pass through the pores to let the exhaust gas treating body fail to capture PM, disabling the exhaust gas treating body to function as a filter.

The above porosity and pore diameter can be measured by known measurement methods using a scanning electron microscope (SEM).

The cell density at a cross section of the exhaust gas treating body 10 is not particularly limited. Still, the cell density is preferably from a lower limit of 31.0 pcs/cm² (200 pcs/inch²) to an upper limit of 93.0 pcs/cm² (600 pcs/inch²), and more preferably from a lower limit of 38.8 pcs/cm² (250 pcs/inch²) to an upper limit of 77.5 pcs/cm² (500 pcs/inch²).

On the exhaust gas treating body 10, a catalyst for purifying exhaust gases may be supported. The catalyst to be supported is preferably, for example, noble metals such as platinum, palladium, and rhodium. Particularly preferred among these is platinum. Other possible catalysts include alkali metals such as potassium and sodium, and alkaline earth metals such as barium. These catalysts may be used alone or in combination.

If these catalysts are supported, PM is more likely to be removed by combustion, and harmful exhaust gas components can be purified.

Next, the metal casing 20 constituting the exhaust gas purifying apparatus 1 of the present invention is described.

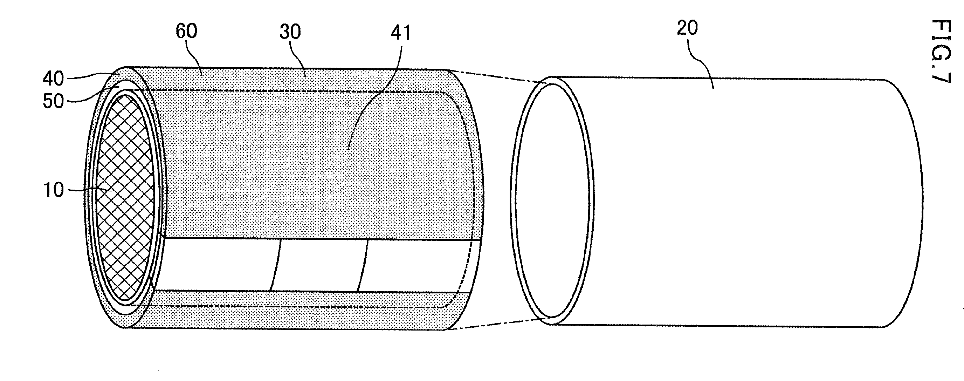

Fig. 7 is a perspective view schematically illustrating one example of the process of accommodating the exhaust gas treating body having the holding sealing material of the present invention wound therearound into a metal casing.

In Fig. 7, the holding sealing material 30 of the present invention is wound around the exhaust gas treating body 10 such that the upper layer mat 40 faces the metal casing 20 and the lower layer mat 50 faces the exhaust gas treating body 10.

The exhaust gas treating body 10 around which the holding sealing material 30 of the present invention is wound is press-fitted into the metal casing 20.

The metal casing 20 is mainly made of a metal such as stainless steel, and may have a substantially cylindrical shape with smaller inner diameters at both ends than the inner diameter at the center portion as illustrated in Fig. 1, or a substantially cylindrical shape with a constant inner diameter as illustrated in Fig. 7.

The inner diameter of the casing 20 (inner diameter of the portion for accommodating the exhaust gas treating body) is preferably slightly smaller than the combined length of the diameter of the ends of the exhaust gas treating body 10 and the thickness of the holding sealing material 30 in the state of being wound around the exhaust gas treating body 10.

Next, one example of the method for manufacturing the holding sealing material 30 and the exhaust gas purifying apparatus 1 of the present invention is described.

### (a) Preparation of mats

First, needle-punched mats made of inorganic fibers are prepared.

The mat may be prepared by various methods, and one example is shown below. First, a mixture for spinning which includes raw materials such as a basic aluminum chloride aqueous solution and a silica sol is spun by a blowing method to form an inorganic fiber precursor having an average fiber diameter of 3 to 10 µm. The inorganic fiber precursor is compacted to manufacture a continuous precursor sheet with a predetermined size. The continuous precursor sheet is needle-punched and then fired. These steps complete preparation of the upper layer mat 40 and the lower layer mat 50.

### (b) Adhesion of film

Next, the film 60 is adhered to the upper layer mat 40.

The film 60 is cut into a predetermined shape. The film 60 is adhered to the upper layer mat 40 by winding the film 60 around the upper layer mat 40 in the direction perpendicular to the longitudinal direction of the upper mat 40 from the winding start position 47 to the winding end position 48 on the second main surface 42 of the upper layer mat 40. Here, the winding start position 47 and the winding end position 48 are spaced apart from each other, so that the second main surface 42 of the upper layer mat 40 is partly exposed.

The film 60 may be adhered at the same time as covering the upper layer mat 40 with the film 60 to which an adhesive has been applied, or may be adhered by thermocompression bonding after covering the upper layer mat 40 with the film 60.

### (c) Lamination

The upper layer mat 40 is laminated on the lower layer mat 50 such that the first main surface 51 of the lower layer mat 50 is in contact with the second main surface 42 of the upper layer mat 40. The laminate of the mats is sewn with thread to form the two fixed parts 32 to fix the mats. The description about the positions of the fixed parts 32 to be formed is omitted since it has already been made.

The laminate of the mats formed through the above steps serves as the holding sealing material 30 which is one example of the holding sealing material of the present invention.

The step (a) preparation of mats may include applying an organic binder and/or an inorganic binder to inorganic fibers.

An organic binder and/or an inorganic binder may be applied to inorganic fibers by any method and any procedure. For example, the mats after firing may be immersed in a solution including the binder(s) to allow the mats to be impregnated with the binder(s), or the binder(s) may be dropped on the mats by methods such as a curtain coating method to allow the mats to be impregnated with the binder(s). After the impregnation, the amount of the binder(s) adhered to the mats may be adjusted by suction dehydration.

The following describes one example of the method for manufacturing the exhaust gas purifying apparatus 1 which is one example of the exhaust gas purifying apparatus of the present invention including the holding sealing material 30.

In the method for manufacturing the exhaust gas purifying apparatus 1 of the present invention, the exhaust gas purifying apparatus 1 includes the exhaust gas treating body 10, the metal casing 20 accommodating the exhaust gas treating body 10, and the holding sealing material 30 placed between the exhaust gas treating body 10 and the metal casing 20. The holding sealing material 30 is manufactured by the method for manufacturing the holding sealing material of the present invention. The method includes winding a laminate of a plurality of mats (holding sealing material 30) around the exhaust gas treating body 10 such that the upper layer mat 40 faces the metal casing 20 and the lower layer mat 50 faces the exhaust gas treating body 10; and press-fitting the exhaust gas treating body 10 with the laminate of the plurality of mats (holding sealing material 30) wound therearound into the metal casing 20.

### (d) Winding

The holding sealing material 30 of the present invention is wound around the exhaust gas treating body 10.

The holding sealing material 30 is wound onto (along) the outer periphery of the substantially round pillar shaped exhaust gas treating body 10 manufactured by known methods such that the second main surface 52 of the lower layer mat 50 of the holding sealing material 30 of the present invention is in contact with the exhaust gas treating body 10. Here, the projected portion 53a and the recessed portion 54a of the lower layer mat 50 are fitted together, and the projected portion 43a and the recessed portion 44a of the upper layer mat 40 are fitted together.

### (e) Press fitting

As illustrated in Fig. 7, the exhaust gas treating body 10 with the holding sealing material 30 wound therearound is press-fitted into the metal casing 20, which is mainly made of a material such as a metal and has a substantially cylindrical shape and a predetermined size, by a press-fitting method (stuffing method).

The above steps yield the exhaust gas purifying apparatus 1 that is one example of the exhaust gas purifying apparatus of the present invention.

In addition, the holding sealing material of the present invention and the exhaust gas purifying apparatus of the present invention may have the following structure.

Although the above description about the holding sealing material of the present invention has been made assuming that the holding sealing material is a laminate of two mats, the holding sealing material of the present invention may be a laminate of at least two mats.

In such a case, the mat with the shortest longitudinal length among the mats is in contact with the exhaust gas treating body, and the mat with the longest longitudinal length among the mats is in contact with the metal casing.

Although the above description about the holding sealing material of the present invention has been made assuming that the mats of the holding sealing material are fixed at two fixed parts, the mats may be fixed at one fixed part or three or more fixed parts.

Although the above description about the holding sealing material of the present invention has been made assuming that the mats of the holding sealing material are fixed by fixed parts, the mats may be bound by at least one band with no fixing strength. In a holding sealing material with the above structure, the mats are not fixed to each other. Thus, the mats may be moved in the longitudinal direction when the holding sealing material is wound around the exhaust gas treating body. Therefore, even if the mats are dislocated relative to each other, the relative position between the mats may be finely adjusted while the holding sealing material is being wound around the exhaust gas treating body. As a result, the part where both ends of the holding sealing material meet is less likely to have a gap.

The band is preferably made of paper or resin. Paper or resin may be suitably used as the band with no fixing strength between the surfaces of the mats and the band.

Although the above description about the exhaust gas purifying apparatus of the present invention has been made assuming that the exhaust gas treating body is an integrated exhaust gas treating body, the exhaust gas treating body constituting the exhaust gas purifying apparatus of the present invention may be an aggregated exhaust gas treating body formed by binding a plurality of units with adhesive layers therebetween.

The exhaust gas treating body constituting the exhaust gas purifying apparatus of the present invention may have any shape other than the round pillar shape, such as a cylindroid shape or a rectangular pillar shape.

Although the above descriptions have been made assuming that the exhaust gas treating body is a filter in which either one end of each cell is sealed, neither end of each cell may be sealed in the exhaust gas treating body constituting the exhaust gas purifying apparatus of the present invention. Such an exhaust gas treating body is suitable as a catalyst carrier.

The effects of the holding sealing material, the method for manufacturing the holding sealing material, the exhaust gas purifying apparatus, and the method for manufacturing the exhaust gas purifying apparatus of the present invention are listed below.
(1) The holding sealing material of the present invention includes a laminate of a plurality of mats each including inorganic fibers and having a rectangle shape in a plan view, the mats arranged in the order of longitudinal length from the shortest to the longest. Accordingly, when the holding sealing material of the present invention is wound around the exhaust gas treating body, a gap attributed to the different inner and outer peripheries is hardly generated in the portion where the ends of the holding sealing material meet. The exhaust gas purifying apparatus including the holding sealing material of the present invention therefore has sufficient sealability for preventing exhaust gas leakage.
(2) The holding sealing material of the present invention includes a film adhered to a first main surface and longitudinal side surfaces of the mat with the longest longitudinal length among the mats of the laminate, the first main surface being on the side opposite to a second main surface which is in contact with the next longest mat.

The surface of the mat is the part from which inorganic fibers are scattered. In particular, the mat constituting the outermost layer of the laminate has the largest radius of curvature, and thus receives the largest tensile stress when the holding sealing material is wound around the exhaust gas treating body. The tensile stress causes the inorganic fibers to be easily torn. As a result, a defect such as a rip is generated in the surface of the mat, and thus the inorganic fibers are likely to be scattered.

However, if a film is adhered to the mat as in the case of the holding sealing material of the present invention, such scattering of inorganic fibers can be reduced.
(3) In the holding sealing material of the present invention, the film is adhered also to the longitudinal side surfaces of the mat with the longest longitudinal length.

When the exhaust gas treating body with the holding sealing material wound therearound is press-fitted into a metal casing, the holding sealing material is compacted in the thickness direction. The holding sealing material is therefore likely to discharge air from the longitudinal side surfaces. The discharging air leads to scattering of inorganic fibers. If the holding sealing material includes a film adhered to the longitudinal side surfaces of the mat having the longest longitudinal length as in the case of the holding sealing material of the present invention, the structure reduces scattering of inorganic fibers from the parts to which a film is adhered. Accordingly, scattering of inorganic fibers can be reduced in dealing with the holding sealing material of the present invention.
(4) In the holding sealing material of the present invention, the film is adhered to also the second main surface of the mat with the longest longitudinal length, so that the second main surface is partly exposed. The exposed part allows the mat with the longest longitudinal length to come into direct contact with the next longest mat. That is, at this part, the inorganic fibers contained in the mats are in direct contact and are thus entangled, whereby the contact between the mats increases. Furthermore, since the inorganic fibers are rubbed against each other, the mat with the longest longitudinal length and the mat in contact with the longest mat are not likely to be dislocated relative to each other when the exhaust gas treating body around which the holding sealing material of the present invention is wound is press-fitted into the metal casing. Therefore, protrusion of the mat from the end of the metal casing can be prevented.

### EXAMPLES

Hereinafter, the present invention is more specifically described by way of examples which, however, do not intended to limit the scope of the present invention.

### (Example 1)

### (a) Preparation of mats

### (a-1) Spinning

A silica sol was added to an aqueous basic aluminum chloride solution adjusted to have an Al content of 70 g/L and an atomic ratio of Al:Cl = 1:1.8 such that the composition ratio (by weight) of the inorganic fibers after firing would be Al₂O₃:SiO₂ = 72:28. To the mixture was added a proper amount of an organic polymer (polyvinyl alcohol), and thereby a mixed solution was prepared.

The obtained mixed solution was concentrated to give a mixture for spinning. The mixture for spinning was spun by blowing to manufacture an inorganic fiber precursor having an average fiber length of 100 mm and an average fiber diameter of 5.1 µm.

### (a-2) Compaction

The inorganic fiber precursor obtained in the above step (a-1) was compacted to manufacture a continuous precursor sheet.

### (a-3) Needle punching

The sheet obtained in the above step (a-2) was continuously needle-punched under the following conditions, so that a needle-punched body was manufactured.

First, a needle board having needles attached thereto at a density of 21 pcs/cm² was prepared. Next, the needle board was set above one of the surfaces of the sheet, and needle punching was carried out by allowing the needle board to descend and ascend once along the thickness direction of the sheet so that a needle-punched body was manufactured. On this occasion, each needle was made to penetrate the sheet until a barb formed on the tip of the needle had completely protruded from the surface on the opposite side of the sheet.

### (a-4) Firing

The needle-punched body obtained in the above step (a-3) was continuously fired at a maximum temperature of 1250°C, so that a fired sheet formed from inorganic fibers including alumina and silica was manufactured. The average fiber diameter of the inorganic fibers was 5.1 µm, and the minimum inorganic fiber diameter was 3.2 µm. The sheet formed from alumina fibers obtained thereby had a bulk density of 0.15 g/cm³ and a basis weight of 1400 g/m².

### (a-5) Cutting

The fired sheet obtained in the above step (a-4) was cut into a cut-off sheet.

### (a-6) Impregnation

The cut-off sheet obtained in the above step (a-5) was flow-coated with an organic binder solution (acrylic latex) containing an acrylic resin serving as an organic binder, so that the cut-off sheet was impregnated with the organic binder. Thereby, an impregnated sheet was manufactured.

### (a-7) Drying

An excessive organic binder solution was removed by suction from the impregnated sheet obtained in the above step (a-6), and the resulting product was dried under pressure, so that a needle-punched mat having a thickness of 6.8 mm was manufactured.

### (a-8) Cutting

The mat obtained in (a-7) was cut into the upper layer mat 40 that has a size in a plan view of 1089 mm (full length) × 371 mm (width) with the projected portion 43a of 24.5 mm (full length) × 100 mm (width) at one end and the recessed portion 44a to fit the projected portion 43a at the other end. Similarly, the mat obtained in (a-7) was cut into the lower layer mat 50 that has a size in a plan view of 1023 mm (full length) × 371 mm (width).

### (b) Film adhesion

A film with a polyester pressure-sensitive adhesive (thickness: 40 µm; KATO SEIKO Co., Ltd.) was cut into a substantial rectangle with a size of 1050 mm (full length) × 422 mm (width).

The film was adhered to the upper layer mat 40 by continuously winding the film around the upper layer mat 40 from the winding start position 47 to the winding end position 48 on the second main surface 42 of the upper layer mat 40, along the second main surface 42, the first side surface 45, the first main surface 41, the second side surface 46, and the second main surface 42 of the upper layer mat 40. The winding start position 47 was arranged at 25 mm from the first side surface 45 toward the second side surface 46 of the upper layer mat 40, and the winding end position 48 was arranged at 25 mm from the second side surface 46 toward the first side surface 45 of the upper layer mat 40.

### (c) Lamination

The upper layer mat 40 was laminated on the lower layer mat 50 such that the first main surface 51 of the lower layer mat 50 was in contact with the second main surface 42 of the upper layer mat 40.

Then, two fixed parts were formed by sewing with thread to fix the upper layer mat 40 and the lower layer mat 50.

The two fixed parts were formed in a manner to each exist along the direction perpendicular to the longitudinal direction of the mats of the laminate and to have an interval of 70 mm therebetween.

The thus manufactured holding sealing material served as the holding sealing material 30 of Example 1. The holding sealing material 30 of Example 1 has such a cross section as illustrated in Fig. 4 when cut along a line perpendicular to the longitudinal direction.

### (d) Winding

### (d-1) Manufacture of molded body of exhaust gas treating body

Coarse particles of silicon carbide with an average particle diameter of 22 µm (52.8% by weight) and fine particles of silicon carbide with an average particle diameter of 0.5 µm (22.6% by weight) were mixed. The resulting mixture was kneaded together with an acrylic resin (2.1% by weight), an organic binder (methyl cellulose, 4.6% by weight), a lubricant (UNILUB from NOF Corp., 2.8% by weight), glycerol (1.3% by weight), and water (13.8% by weight) to give a wet mixture. The wet mixture was extrusion molded, so that a molded body of the exhaust gas treating body 10 illustrated in Fig. 6 was manufactured.

### (d-2) Drying

The molded body of the exhaust gas treating body 10 obtained in the above step (d-1) was dried by a microwave dryer, whereby a dried body of the exhaust gas treating body 10 was obtained.

### (d-3) Degreasing

The dried body of the exhaust gas treating body 10 obtained in the above step (d-2) was degreased at 400°C to manufacture a degreased body of the exhaust gas treating body 10.

### (d-4) Firing

The degreased body of the exhaust gas treating body 10 obtained in the above step (d-3) was fired at 2200°C for three hours in an argon atmosphere under an ordinary pressure, and thereby a silicon carbide fired body of the exhaust gas treating body 10 having a porosity of 45%, an average pore diameter of 15 µm, the number of cells (cell density) of 300 pcs/inch², and a cell wall thickness of 0.25 mm (10 mil) was manufactured.

### (d-5) Catalyst supporting

The silicon carbide fired body of the exhaust gas treating body 10 obtained in the above step (d-4) was immersed in a nitric acid platinum solution, was taken out from the nitric acid platinum solution, and was allowed to stand at 600°C for one hour. Thereby, a platinum catalyst was supported on the cell walls 12 of the silicon carbide fired body of the exhaust gas treating body 10.

The thus manufactured silicon carbide fired body was used as the exhaust gas treating body 10 around which the holding sealing material 30 of the present example would be wound. The exhaust gas treating body 10 has a substantially round pillar shape with a length of 350 mm and an outer diameter of 326 mm.

### (d-6) Winding of holding sealing material

The holding sealing material 30 of the present invention was wound around the exhaust gas treating body 10 obtained through the above step (d-5). Here, the winding of the holding sealing material 30 was carried out such that the second main surface 52 of the lower layer mat 50 of the holding sealing material 30 of this example was in contact with the exhaust gas treating body 10. The projected portion 53a and the recessed portion 54a of the lower layer mat 50 were fitted together, and the projected portion 43a and the recessed portion 44a of the upper layer mat 40 were fitted together.

### (e) Press-fitting

The exhaust gas treating body 10 with the holding sealing material 30 wound therearound was press-fitted into the metal casing 20 by press-fitting (stuffing). The gap bulk density (GBD) of the holding sealing material 30 was set to 0.4 g/cm³.

The thus manufactured exhaust gas purifying apparatus served as the exhaust gas purifying apparatus of Example 1.

### (Comparative Examples)

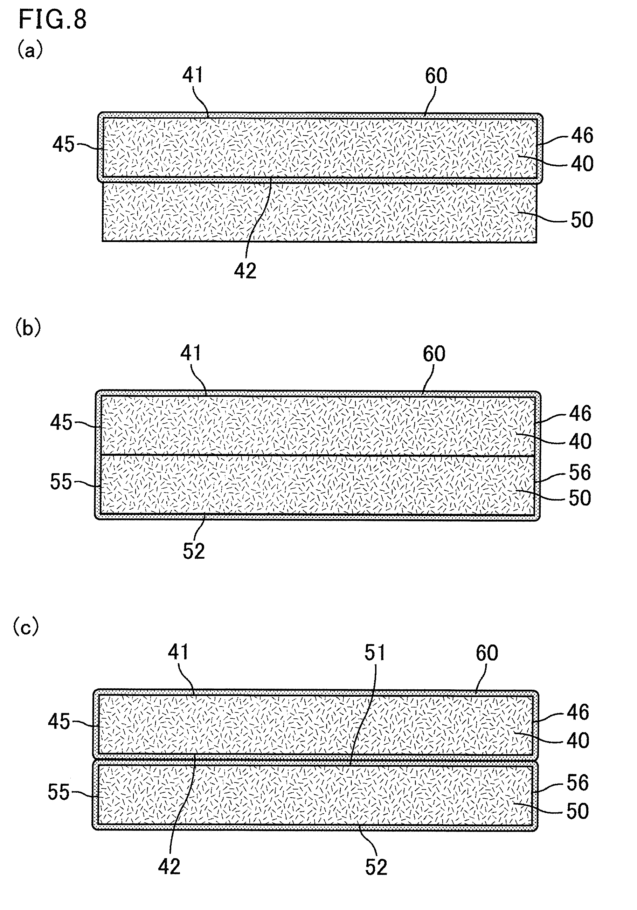

Figs. 8(a) to 8(c) are each a schematic cross-sectional view taken in the direction perpendicular to the longitudinal direction of the holding sealing material of a comparative example of the present invention.

### (Comparative Example 1)

The exhaust gas purifying apparatus of Comparative Example 1 was manufactured in the same manner as in Example 1 except that the step (b) film adhesion in Example 1 was changed as in the following to allow the resulting holding sealing material to have such a cross section as illustrated in Fig. 8(a) when cut along a line perpendicular to the longitudinal direction.

### (b) Film adhesion

A film with a polyester adhesive was cut into a substantial rectangle with a size of 1050 mm (full length) × 780 mm (width).

The film was adhered to the upper layer mat 40 by continuously winding the film around the upper layer mat 40 in a manner to cover all of the second main surface 42, the first side surface 45, the first main surface 41, and the second side surface 46 of the upper layer mat 40.

In the holding sealing material of Comparative Example 1, the upper layer mat 40 and the lower layer mat 50 were completely separated by the film 60.

### (Comparative Example 2)

The exhaust gas purifying apparatus of Comparative Example 2 was manufactured in the same manner as in Example 1 except that the order and procedure of (b) film adhesion and (c) lamination in Example 1 were changed as in the following, to allow the holding sealing material to have such a cross section as illustrated in Fig. 8(b) when cut along a line perpendicular to the longitudinal direction.

### (b) Lamination

The upper layer mat 40 was laminated on the lower layer mat 50 such that the first main surface 51 of the lower layer mat 50 was in contact with the second main surface 42 of the upper layer mat 40.

### (c) Film adhesion

A film with a polyester adhesive was cut into a substantial rectangle with a size of 1000 mm (full length) × 780 mm (width).

The film was adhered to the upper layer mat 40 and the lower layer mat 50 by continuously winding the film around the upper and lower layer mats in a manner to cover all of the first main surface 41, first side surface 45, and the second side surface 46 of the upper layer mat 40, and the first side surface 55, the second main surface 52, and the second side surface 56 of the lower layer mat 50.

Then, two fixed parts were formed by sewing with thread to fix the upper layer mat 40 and the lower layer mat 50.

The two fixed parts were formed in a manner to each exist along the direction perpendicular to the longitudinal direction of the mats of the laminate and to have an interval of 70 mm therebetween.

When the holding sealing material of the Comparative Example 2 is wound around the exhaust gas treating body, the exhaust gas treating body and the lower layer mat 50 are completely separated by the film 60.

### (Comparative Example 3)

The exhaust gas purifying apparatus of Comparative Example 3 was manufactured in the same manner as in Example 1 except that the step (b) film adhesion in Example 1 was changed as in the following, to allow the resulting holding sealing material to have such a cross section as illustrated in Fig. 8(c) when cut along a line perpendicular to the longitudinal direction.

### (b) Film adhesion

A sheet of a film with a polyester adhesive was cut into a substantial rectangle with a size of 1050 mm (full length) × 780 mm (width).

The film was adhered to the upper layer mat 40 by continuously winding the film around the upper layer mat 40 in a manner to cover all of the second main surface 42, the first side surface 45, the first main surface 41, and the second side surface 46 of the upper layer mat 40.

Subsequently, another sheet of the film with a polyester adhesive was cut into a substantial rectangle with a size of 1000 mm (full length) × 780 mm (width).

Then, the film was adhered to the lower layer mat 50 by continuously winding the film around the lower layer mat 50 in a manner to cover all of the second main surface 52, the first side surface 55, the first main surface 51, and the second side surface 56 of the lower layer mat 50.

In the holding sealing material of Comparative Example 3, the upper layer mat 40 and the lower layer mat 50 are completely separated by the film 60. Moreover, when the holding sealing material of Comparative Example 3 is wound around the exhaust gas treating body, the exhaust gas treating body and the lower layer mat 50 are completely separated by the film 60.

The holding sealing materials of Example 1 and Comparative Examples were each wound around the exhaust gas treating body, and the exhaust gas treating body was press-fitted into a metal casing. Each holding sealing material was visually observed if it protruded from the end of the metal casing, and the accommodated state of the holding sealing material was evaluated based on the following criteria.

### (Evaluation criteria)

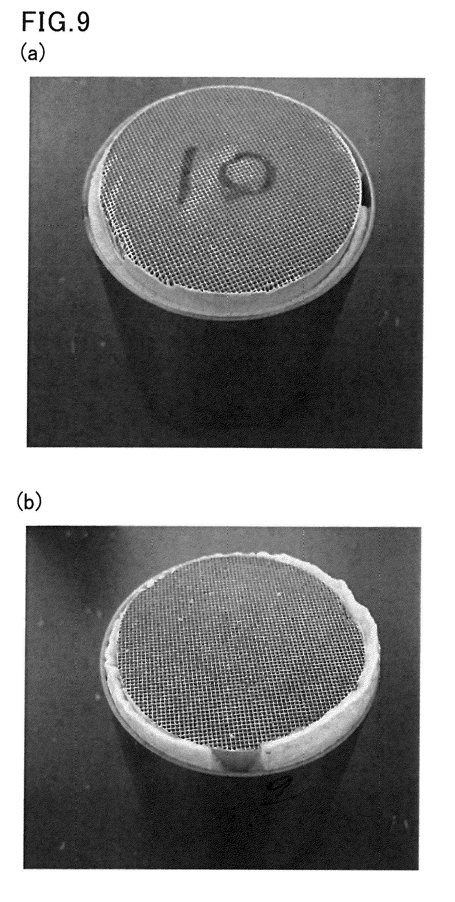

Fig. 9(a) is a photograph showing the state where the exhaust gas treating body around which the holding sealing material of the present invention is wound has been normally press-fitted into the metal casing. Fig. 9(b) is a photograph showing the state where when the exhaust gas treating body around which the holding sealing material formed by a laminate of mats is wound is press-fitted, the mats constituting the holding sealing material are dislocated relative to each other, and the dislocated mats are protruding from the end of the metal casing.

A holding sealing material having no protrusion of mats from the end of the metal casing as illustrated in Fig. 9(a) was evaluated as "acceptable". A holding sealing material having a protrusion of dislocated mats from the end of a metal casing as illustrated in Fig. 9(b) was evaluated as "unacceptable".

The accommodated state of the holding sealing material of Example 1 was evaluated as "acceptable". The holding sealing material had no protrusion from the end of the metal casing.

The accommodated state of the holding sealing material of Comparative Example 1 was evaluated as "unacceptable". The holding sealing material had dislocation between the upper layer mat 40 and the lower layer mat 50 to cause the upper layer mat 40 to protrude from the end of the metal casing. This is presumably because the upper layer mat 40 and the lower layer mat 50 were completely separated by the film 60, which caused insufficient contact between these mats to result in dislocation between the upper layer mat 40 and the lower layer mat 50.

The accommodated state of the holding sealing material of Comparative Example 2 was evaluated as "unacceptable". Although there is no dislocation between the upper layer mat 40 and the lower layer mat 50, the upper layer mat 40 and the lower layer mat 50 protruded from the end of the metal casing. This is presumably because the exhaust gas treating body and the lower layer mat 50 were completely separated by the film 60, which caused insufficient contact between these to result in dislocation between the exhaust gas treating body and the lower layer mat 50.

The accommodated state of the holding sealing material of Comparative Example 3 was evaluated as "unacceptable". There was dislocation between the upper layer mat 40 and the lower layer mat 50, and the both mats protruded from the end of the metal casing. This is presumably because the exhaust gas treating body, the upper layer mat 40, and the lower layer mat 50 were completely separated by the film 60, which caused insufficient contact between these to result in dislocation between the exhaust gas treating body, the upper layer mat 40, and the lower layer mat 50.

The holding sealing material of the present invention essentially features a laminate of a plurality of mats each containing inorganic fibers and having a rectangle shape in a plan view, the mats arranged in the order of longitudinal length from the shortest to the longest; and a film adhered to a first main surface and longitudinal side surfaces of the mat with the longest longitudinal length among the mats of the laminate, the first main surface being on the side opposite to a second main surface which is in contact with the next longest mat, the film adhered to the second main surface to allow the second main surface to be partly exposed.

The desired effect can be achieved by appropriately combining the essential features with various structures specifically described in the Description of Embodiments (e.g., the shape of the film, the position of the film, the material of the film, and the method for fixing the laminate of the plurality of mats).

### REFERENCE SIGNS LIST

- 1: Exhaust gas purifying apparatus
- 10: Exhaust gas treating body
- 11: Cell
- 12: Cell wall
- 13: Plug
- 14: Peripheral coat layer
- 20: Metal casing
- 30: Holding sealing material
- 40: Upper layer mat
- 41, 51: First main surface
- 42, 52: Second main surface
- 43, 44, 53, 54: End
- 43a, 53a: Projected portion
- 44a, 54a: Recessed portion
- 45, 55: First side surface
- 46, 56: Second side surface
- 50: Lower layer mat
- 60: Film

## Claims

1. A holding sealing material comprising:
a laminate of a plurality of mats each comprising inorganic fibers and having a rectangular shape in a plan view, the mats arranged in the order of longitudinal length from the shortest to the longest; and
a film adhered to a first main surface and longitudinal side surfaces of the mat with the longest longitudinal length among the mats of the laminate, the first main surface being on the side opposite to a second main surface which is in contact with the next longest mat,
the film adhered to the second main surface to allow the second main surface to be partly exposed.

2. The holding sealing material according to claim 1,
wherein the film adhered to the surfaces of the mat with the longest longitudinal length is continuously wound once around the mat in the direction perpendicular to the longitudinal direction of the mat,
the mat with the longest longitudinal length comprises a winding start position and a winding end position on the second main surface, and
the winding start position and the winding end position are spaced apart from each other.

3. The holding sealing material according to claim 1 or 2,
wherein the laminate of the plurality of mats consists of two mats.

4. The holding sealing material according to any one of claims 1 to 3,
wherein the film comprises at least one material selected from the group consisting of polyester, high-density polyethylene, and polypropylene.

5. The holding sealing material according to any one of claims 1 to 4,
wherein the film is fixed on the laminate of the plurality of mats with an adhesive or by thermocompression bonding.

6. The holding sealing material according to any one of claims 1 to 5,
wherein the plurality of mats of the laminate are bound by at least one band with no fixing strength.

7. The holding sealing material according to claim 6,
wherein the band is made of paper or resin.

8. The holding sealing material according to any one of claims 1 to 5,
wherein the plurality of mats of the laminate are fixed to each other at at least one fixed part.

9. The holding sealing material according to claim 8,
wherein the fixed part exists along the direction perpendicular to the longitudinal direction of the laminate of the plurality of mats.

10. The holding sealing material according to claim 8 or 9,
wherein the fixed part is made of thread, pressure-sensitive adhesive tape, or an adhesive.

11. An exhaust gas purifying apparatus comprising:
an exhaust gas treating body,
a metal casing accommodating the exhaust gas treating body, and
a holding sealing material placed between the exhaust gas treating body and the metal casing,
the holding sealing material comprising a laminate of a plurality of mats each comprising inorganic fibers and having a rectangular shape in a plan view, the mats arranged in the order of longitudinal length from the shortest to the longest, the mat with the longest longitudinal length among the mats of the laminate facing the metal casing, the mat with the shortest longitudinal length among the mats of the laminate facing the exhaust gas treating body,
the holding sealing material comprising a film adhered to a first main surface and longitudinal side surfaces of the mat with the longest longitudinal length among the mats of the laminate, the first main surface being on the side opposite to a second main surface which is in contact with the next longest mat,
the film adhered to the second main surface to allow the second main surface to be partly exposed.

12. The exhaust gas purifying apparatus according to claim 11,
wherein the film adhered to the surfaces of the mat with the longest longitudinal length is continuously wound once around the mat in the direction perpendicular to the longitudinal direction of the mat,
the mat with the longest longitudinal length comprises a winding start position and a winding end position on the second main surface, and
the winding start position and the winding end position are spaced apart from each other.

13. A method for manufacturing an exhaust gas purifying apparatus,
the exhaust gas purifying apparatus comprising an exhaust gas treating body, a metal casing accommodating the exhaust gas treating body, and a holding sealing material placed between the exhaust gas treating body and the metal casing, the holding sealing material comprising a laminate of a plurality of mats each comprising inorganic fibers and having a rectangular shape in a plan view, the mats arranged in the order of longitudinal length from the shortest to the longest, the mat with the longest longitudinal length among the mats of the laminate facing the metal casing, the mat with the shortest longitudinal length among the mats of the laminate facing the exhaust gas treating body,
the method comprising:
adhering a film to both main surfaces and longitudinal side surfaces of the mat with the longest longitudinal length to allow part of one of the main surfaces to be exposed;
forming the laminate of the plurality of mats by arranging the mats in the order of longitudinal length from the shortest to the longest by bringing the exposed main surface of the longest mat as a top layer in contact with the next longest mat;
winding the laminate of the plurality of mats around the exhaust gas treating body by allowing the mat with the longest longitudinal length to face the metal casing and allowing the mat with the shortest longitudinal length to face the exhaust gas treating body; and
press-fitting the exhaust gas treating body with the laminate of the plurality of mats wound therearound into the metal casing.

14. The method for manufacturing an exhaust gas purifying apparatus according to claim 13,
wherein the film is adhered to the surfaces of the mat with the longest longitudinal length by continuously winding the film once around the mat in the direction perpendicular to the longitudinal direction of the mat,
the mat with the longest longitudinal length is made to have a winding start position and a winding end position on the partly exposed main surface, and
the winding start position and the winding end position are spaced apart from each other.

## Patentansprüche

1. Haltedichtungsmaterial mit:
einer Schichtung aus mehreren Matten, von denen jede anorganische Fasern und in einer Draufsicht eine rechteckige Form aufweist, wobei die Matten in der Reihenfolge der Longitudinallänge von der Kürzesten zur Längsten angeordnet sind; und
einem Film, der an eine erste Hauptfläche und longitudinale Seitenflächen der Matte mit der längsten Longitudinallänge unter den Matten der Schichtung angehaftet ist, wobei die erste Hauptfläche an der Seite gegenüber einer zweiten Hauptfläche angeordnet ist, welche sich mit der nächst-längsten Matte in Kontakt befindet,
wobei der Film derart an die zweite Hauptfläche angehaftet ist, dass er der zweiten Hauptfläche ermöglicht, teilweise frei zu liegen.

2. Haltedichtungsmaterial nach Anspruch 1,
wobei der an die Flächen der Matte mit der längsten Longitudinallänge angehaftete Film in der Richtung senkrecht zur Longitudinalrichtung der Matte kontinuierlich einmal um die Matte gewickelt ist,
die Matte mit der längsten Longitudinallänge eine Wicklungs-Startposition und eine Wicklungs-Endposition an der zweiten Hauptfläche aufweist, und
die Wicklungs-Startposition und die Wicklungs-Endposition voneinander beabstandet sind.

3. Haltedichtungsmaterial nach Anspruch 1 oder 2,
wobei die Schichtung der mehreren Matten aus zwei Matten besteht.

4. Haltedichtungsmaterial nach einem der Ansprüche 1 bis 3,
wobei der Film zumindest ein Material aufweist, das aus der Gruppe bestehend aus Polyester, Polyethylen hoher Dichte und Polypropylen ausgewählt ist.

5. Haltedichtungsmaterial nach einem der Ansprüche 1 bis 4,
wobei der Film an der Schichtung der mehreren Matten mit einem Haftmittel oder durch Thermokompressionsverbindung befestigt ist.

6. Haltedichtungsmaterial nach einem der Ansprüche 1 bis 5,
wobei die mehreren Matten der Schichtung durch zumindest ein Band ohne Fixierungsfestigkeit verbunden sind.

7. Haltedichtungsmaterial nach Anspruch 6,
wobei das Band aus Papier oder Harz ausgebildet ist.

8. Haltedichtungsmaterial nach einem der Ansprüche 1 bis 5,
wobei die mehreren Matten der Schichtung an zumindest einem festen Teil aneinander befestigt sind.

9. Haltedichtungsmaterial nach Anspruch 8,
wobei das feste Teil entlang der Richtung senkrecht zur Longitudinalrichtung der Schichtung der mehreren Matten ausgebildet ist.

10. Haltedichtungsmaterial nach Anspruch 8 oder 9,
wobei das feste Teil aus Strangmaterial, Haftklebeband, oder einem Haftmittel ausgebildet ist.

11. Abgasreinigungsvorrichtung mit:
einem Abgas-Behandlungskörper,
einem Metallgehäuse, das den Abgas-Behandlungskörper aufnimmt, und
einem zwischen dem Abgas-Behandlungskörper und dem Metallgehäuse angeordneten Haltedichtungsmaterial,
wobei das Haltedichtungsmaterial eine Schichtung mehrerer Matten aufweist, von denen jede anorganische Fasern und in einer Draufsicht eine rechteckige Form aufweist, wobei die Matten in der Reihenfolge der Longitudinallänge von der Kürzesten zur Längsten angeordnet sind, die Matte mit der längsten Longitudinallänge unter den Matten der Schichtung zum Metallgehäuse weist, und die Matte mit der kürzesten Longitudinallänge unter den Matten der Schichtung zum Abgas-Behandlungskörper weist;
das Haltedichtungsmaterial einen Film aufweist, der an eine erste Hauptfläche und longitudinale Seitenflächen der Matte mit der längsten Longitudinallänge unter den Matten der Schichtung angehaftet ist, wobei die erste Hauptfläche an der Seite gegenüber einer zweiten Hauptfläche angeordnet ist, welche sich mit der nächst-längsten Matte in Kontakt befindet,
wobei der Film derart an die zweite Hauptfläche angehaftet ist, dass er der zweiten Hauptfläche ermöglicht, teilweise frei zu liegen.

12. Abgasreinigungsvorrichtung nach Anspruch 11,
wobei der an die Flächen der Matte mit der längsten Longitudinallänge angehaftete Film in der Richtung senkrecht zur Longitudinalrichtung der Matte kontinuierlich einmal um die Matte gewickelt ist,
die Matte mit der längsten Longitudinallänge eine Wicklungs-Startposition und eine Wicklungs-Endposition an der zweiten Hauptfläche aufweist, und
die Wicklungs-Startposition und die Wicklungs-Endposition voneinander beabstandet sind.

13. Verfahren zur Herstellung einer Abgasreinigungsvorrichtung, wobei
die Abgasreinigungsvorrichtung einen Abgas-Behandlungskörper, ein Metallgehäuse, das den Abgas-Behandlungskörper aufnimmt, und ein zwischen dem Abgas-Behandlungskörper und dem Metallgehäuse angeordnetes Haltedichtungsmaterial aufweist,
das Haltedichtungsmaterial eine Schichtung mehrerer Matten aufweist, von denen jede anorganische Fasern und in einer Draufsicht eine rechteckige Form aufweist, wobei die Matten in der Reihenfolge der Longitudinallänge von der Kürzesten zur Längsten angeordnet sind, die Matte mit der längsten Longitudinallänge unter den Matten der Schichtung zum Metallgehäuse weist, und die Matte mit der kürzesten Longitudinallänge unter den Matten der Schichtung zum Abgas-Behandlungskörper weist,
das Verfahren aufweist:
Anhaften eines Films an beide Hauptflächen und longitudinale Seitenflächen der Matte mit der längsten Longitudinallänge derart, dass Teile einer der Hauptflächen freigelegt sein können;
Ausbilden der Schichtung der mehreren Matten durch Anordnen der Matten in der Reihenfolge der Longitudinallänge von der Kürzesten zur Längsten durch In-Kontakt-bringen der freigelegten Hauptfläche der längsten Matte als eine oberste Schicht mit der nächst-längsten Matte;
Wickeln der Schichtung der mehreren Matten um den Abgas-Behandlungskörper, sodass die Matte mit der längsten Longitudinallänge zum Metallgehäuse gerichtet sein kann und die Matte mit der kürzesten Longitudinallänge zum Abgas-Behandlungskörper gerichtet sein kann; und
Presspassen des Abgas-Behandlungskörpers mit der darum gewickelten Schichtung der mehreren Matten in das Metallgehäuse.

14. Verfahren zur Herstellung einer Abgasreinigungsvorrichtung nach Anspruch 13,
wobei der Film durch einmaliges kontinuierliches Wickeln in der Richtung senkrecht zur Longitudinalrichtung der Matte an die Flächen der Matte mit der längsten Longitudinallänge angehaftet wird,
die Matte mit der längsten Longitudinallänge derart ausgebildet wird, dass sie eine Wicklungs-Startposition und eine Wicklungs-Endposition an der teilweise freigelegten Hauptfläche aufweist, und
die Wicklungs-Startposition und die Wicklungs-Endposition voneinander beabstandet sind.

## Revendications

1. Matériau d'étanchéité et de fixation comprenant :
un stratifié d'une pluralité de tapis comprenant chacun des fibres inorganiques et ayant une forme rectangulaire dans une vue en plan, les tapis étant agencés dans l'ordre de la longueur longitudinale du plus court au plus long ; et
un film adhéré à une première surface principale et à des surfaces latérales longitudinales du tapis ayant la plus longue longueur longitudinale parmi les tapis du stratifié, la première surface principale étant sur le côté opposé à une deuxième surface principale qui est en contact avec le plus long tapis suivant,
le film étant adhéré à la deuxième surface principale pour permettre à la deuxième surface principale d'être partiellement exposée.

2. Matériau d'étanchéité et de fixation selon la revendication 1,
dans lequel le film adhéré aux surfaces du tapis ayant la plus longue longueur longitudinale est enroulé en continu une fois autour du tapis dans la direction perpendiculaire à la direction longitudinale du tapis,
le tapis ayant la plus longue longueur longitudinale comprend une position de début d'enroulement et une position de fin d'enroulement sur la deuxième surface principale, et
la position de début d'enroulement et la position de fin d'enroulement sont espacées l'une de l'autre.

3. Matériau d'étanchéité et de fixation selon la revendication 1 ou 2,
dans lequel le stratifié de la pluralité de tapis se compose de deux tapis.

4. Matériau d'étanchéité et de fixation selon l'une quelconque des revendications 1 à 3,
dans lequel le film comprend au moins un matériau choisie dans le groupe constitué par le polyester, le polyéthylène haute densité et le polypropylène.

5. Matériau d'étanchéité et de fixation selon l'une quelconque des revendications 1 à 4,
dans lequel le film est fixé sur le stratifié de la pluralité de tapis avec un adhésif ou par soudage par thermocompression.

6. Matériau d'étanchéité et de fixation selon l'une quelconque des revendications 1 à 5,
dans lequel la pluralité de tapis du stratifié sont liés par au moins une bande sans force de fixation.

7. Matériau d'étanchéité et de fixation selon la revendication 6,
dans lequel la bande est réalisée en papier ou en résine.

8. Matériau d'étanchéité et de fixation selon l'une quelconque des revendications 1 à 5,
dans lequel la pluralité de tapis du stratifié sont fixés les uns aux autres au moins au niveau d'une partie fixe.

9. Matériau d'étanchéité et de fixation selon la revendication 8,
dans lequel la partie fixe existe le long de la direction perpendiculaire à la direction longitudinale du stratifié de la pluralité de tapis.

10. Matériau d'étanchéité et de fixation selon la revendication 8 ou 9,
dans lequel la partie fixe est réalisée en un fil, un ruban adhésif sensible à la pression ou un adhésif.

11. Appareil de purification des gaz d'échappement comprenant :
un corps de traitement des gaz d'échappement,
une enveloppe métallique recevant le corps de traitement des gaz d'échappement, et
un matériau d'étanchéité et de fixation placé entre le corps de traitement des gaz d'échappement et l'enveloppe métallique,
le matériau d'étanchéité et de fixation comprenant un stratifié d'une pluralité de tapis comprenant chacun des fibres inorganiques et ayant une forme rectangulaire dans une vue en plan, les tapis étant agencés dans l'ordre de la longueur longitudinale du plus court au plus long, le tapis ayant la plus longue longueur longitudinale parmi les tapis du stratifié faisant face à l'enveloppe métallique, le tapis ayant la plus courte longueur longitudinale parmi les tapis du stratifié faisant face au corps de traitement des gaz d'échappement,
le matériau d'étanchéité et de fixation comprenant un film adhéré à une première surface principale et à des surfaces latérales longitudinales du tapis ayant la plus longue longueur longitudinale parmi les tapis du stratifié, la première surface principale étant sur le côté opposé à une deuxième surface principale qui est en contact avec le plus long tapis suivant,
le film étant adhéré à la deuxième surface principale pour permettre à la deuxième surface principale d'être partiellement exposée.

12. Appareil de purification des gaz d'échappement selon la revendication 11,
dans lequel le film adhéré aux surfaces du tapis ayant la plus longue longueur longitudinale est enroulé en continu une fois autour du tapis dans la direction perpendiculaire à la direction longitudinale du tapis,
le tapis ayant la plus longue longueur longitudinale comprend une position de début d'enroulement et une position de fin d'enroulement sur la deuxième surface principale, et
la position de début d'enroulement et la position de fin d'enroulement sont espacées l'une de l'autre.

13. Procédé de fabrication d'un appareil de purification des gaz d'échappement,
l'appareil de purification des gaz d'échappement comprenant un corps de traitement des gaz d'échappement, une enveloppe métallique recevant le corps de traitement des gaz d'échappement, et un matériau d'étanchéité et de fixation placé entre le corps de traitement des gaz d'échappement et l'enveloppe métallique, le matériau d'étanchéité et de fixation comprenant un stratifié d'une pluralité de tapis comprenant chacun des fibres inorganiques et ayant une forme rectangulaire dans une vue en plan, les tapis étant agencés dans l'ordre de la longueur longitudinale du plus court au plus long, le tapis ayant la plus longue longueur longitudinale parmi les tapis du stratifié faisant face à l'enveloppe métallique, le tapis ayant la plus courte longueur longitudinale parmi les tapis du stratifié faisant face au corps de traitement des gaz d'échappement,
le procédé comprenant les étapes consistant :
à faire adhérer un film aux deux surfaces principales et aux surfaces latérales longitudinales du tapis ayant la plus longue longueur longitudinale pour permettre à une partie de l'une des surfaces principales d'être exposée ;
à former le stratifié de la pluralité de tapis en agençant les tapis dans l'ordre de la longueur longitudinale du plus court au plus long en amenant la surface principale exposée du plus long tapis en tant que couche supérieure en contact avec le plus long tapis suivant ;
à enrouler le stratifié de la pluralité de tapis autour du corps de traitement des gaz d'échappement en permettant au tapis ayant la plus longue longueur longitudinale de faire face à l'enveloppe métallique et en permettant au tapis ayant la plus courte longueur longitudinale de faire face au corps de traitement des gaz d'échappement ; et
à ajuster par pression le corps de traitement des gaz d'échappement au stratifié de la pluralité de tapis enroulés autour de celui-ci dans l'enveloppe métallique.

14. Procédé de fabrication d'un appareil de purification des gaz d'échappement selon la revendication 13,
dans lequel le film est adhéré aux surfaces du tapis ayant la plus longue longueur longitudinale par enroulement en continu du film une fois autour du tapis dans la direction perpendiculaire à la direction longitudinale du tapis,
le tapis ayant la plus longue longueur longitudinale est réalisé de manière à avoir une position de début d'enroulement et une position de fin d'enroulement sur la surface principale partiellement exposée, et
la position de début d'enroulement et la position de fin d'enroulement sont espacées l'une de l'autre.
